Europäisches Patentamt

European Patent Office

Office européen des brevets

(11) Publication number: **0 126 573**
**A1**

## (12) EUROPEAN PATENT APPLICATION

(21) Application number: **84303018.0**

(22) Date of filing: **04.05.84**

(51) Int. Ci.³: **B 28 C 1/12**

(30) Priority: **18.05.83 GB 8313675**

(43) Date of publication of application: **28.11.84**
**Bulletin 84/48**

(84) Designated Contracting States: **AT BE CH DE FR GB IT LI NL SE**

(71) Applicant: **Ready Mixed Concrete (United Kingdom) Limited, RMC House High Street, Feltham Middlesex (GB)**

(72) Inventor: **Durant, Alan Sidney James, Parrs Farm, Broadway Road, Winchcombe Gloucestershire GL54 5JJ (GB)**

(74) Representative: **Fisher, Bernard et al, Raworth, Moss & Cook 36 Sydenham Road, Croydon Surrey CR0 2EF (GB)**

(54) Method of and system for controlling the mixing of concrete.

(57) Concrete is mixed in a mechanical mixer which is preferably a rotating mixer drum carried on a truck, in accordance with a predetermined formulation requiring a theoretical quantity of water to achieve a predetermined workability by adding to the mixer with the solid constituents a pretedermined fraction of the theoretical quantity of water. The workability of the mix is then measured and compared with the predetermined workability to derive a measure of the additional water required to bring the workability up to the predetermined workability. There is then added to the mix a further quantity of water which does not exceed the derived measure of additional water and which preferably corresponds to the lesser of the derived measure of additional water and the balance of the theoretical value. A monitoring unit associated with the mixer monitors the workability of the mix and the speed of operation of the mixer and identifies these values through a communications link to a control apparatus which controls the loading of the solid constituents and the delivery of water to the mixer and which incorporates a memory which stores data identifying the theoretical amount of water for a given formulation and data identifying the additional amount of water required to increase the workability from one value to another, means for inhibiting loading of the solid constituents to the mixer until the speed of operation of the mixer has attained a pre-set value, means for delivering the predetermined fraction of water to the mixer, means for identifying from the measured workability of the mix and the predetermined value of workability the additional amount of water and for delivering such additional amount of water to the mix.

## Method of and system for
## controlling the mixing of concrete

The present invention relates to a method of and system for controlling the mixing of concrete.

Concrete is a mixture in which a paste of cement and water binds inert aggregates, e.g., sand and gravel or crushed stone into a rocklike mass as the paste hardens through chemical reaction of the cement with the water. The materials used, their relative proportions and the mixing of the materials is important to the physical and chemical properties of the final product. As is well known, one or more additives may be included in the mixture. An important factor in the quality of the final product is the quality of the cement-water paste which binds the aggregates together. If too much water is used, the paste becomes thin and will be weak when it hardens. On the other hand, after mixing, every piece of aggregate should be completely coated with a thoroughly mixed cement paste. There should, therefore, be enough cement-water paste to achieve the coating of the pieces or particles of the aggregate and this paste should not have an excess of water.

In many countries, cement is an expensive ingredient of the mixture and it is uneconomic to incorporate more cement than is required into the mixture. Any tendency to keep down towards the theoretical minimum value, the amount of cement added to the mixture, increases the critical nature of the quantity of water added in order to form the cement-water paste. Any excess water added during the mixing operation cannot subsequently be removed.

Formulations of concrete mixes to produce a product having predetermined characteristics have been developed and are known. From these formulations, the theoretical quantity of water required to be added in a given mix is known or can be calculated. What is not known is the moisture or water content of the aggregate used in any given situation. This moisture or water content can be estimated or measured but this is not convenient. Nevertheless, such moisture or water content forms part of the water content of the mix and cannot be ignored.

Generally the strength of the cement-water paste in a concrete mixture is determined by the workability or slump of the mixed concrete and concrete is supplied to have a particular or specified amount of slump or workability, although in practice such concrete is acceptable if it has a slump or workability within a defined range embracing the specified value. There is a standard test for determining the slump or workability of a batch of concrete in which the amount by which a sample slumps under certain defined conditions is met.

Concrete is mixed in a mechanical mixer which is frequently a rotatable drum into which measured quantities of the constituents of the mixture are loaded. The mechanical mixer can, however, be a stationary drum or trough or other suitable container with rotatable paddles or vanes. It could alternatively have both a rotatable container and rotatable paddles or vanes.

It is known that the slump or workability of a concrete is related to the power output of a drive unit rotating a rotatable member of a mechanical mixer at a given speed. G.B.-A-1,223,558 describes a meter for measuring the power output of the drive unit of a rotating mixing drum in order to derive a measure of the workability of the concrete in the drum.

Concrete is generally mixed at a plant at which the measured quantities of the constituent are loaded into the mechanical mixer and the mixing takes place. The mixed concrete is then delivered to the site of use in a truck equipped to agitate the concrete during transport. Most conveniently, the concrete is mixed at a dry batch plant in a rotatable mixing drum which is carried on a truck ready for delivery to the site. An operator is responsible for loading the drum and ensuring that the mix will have the slump or workability specified. At present, the operator determines the slump subjectively simply by viewing the concrete in the drum as it is loaded and mixed. The operator adds the water to the mixture until his experience suggests that the concrete mix has attained the slump required. The concrete mix is then delivered to the site at which the standard slump test may be carried out. Of course, if the concrete mix fails to meet the specification laid down, it has to be rejected.

It is an object of the present invention to provide a system for controlling the mixing of concrete to ensure that a concrete mix has a slump or workability within a specified predetermined range.

According to one aspect of the present invention there is provided a method of mixing concrete in a mechanical mixer which comprises supplying to the mixer solid constituents according to a predetermined formulation requiring a theoretical quantity of water to be added to achieve a predetermined workability of the mix characterised by the steps of adding to the mixer with the solid constituents an initial volume of water corresponding to a predetermined fraction of the theoretical quantity of water, deriving a measure of the workability of the mix and comparing this with the predetermined workability to derive a measure of the additional water required to achieve the predetermined workability and adding to the mix a further quantity of water not exceeding the derived measure of additional water.

According to another aspect of the present invention there is provided a system for controlling the mixing of concrete in a mechanical mixer to which solid constituents are supplied according to a predetermined formulation requiring a theoretical quantity of water to be added to achieve a predetermined workability of the mix characterised by means for determining a predetermined fraction of the theoretical quantity of water, means for adding to the mixer with the solid constituents a quantity of water corresponding to the predetermined fraction, means for deriving a measure of the workability of the mix, means responsive to the difference between the derived measure of workability and the predetermined workability to derive a measure of the additional water required to achieve the predetermined workability and means for initiating the addition to the mix of a further quantity of water not exceeding the derived measure of additional water.

One embodiment of the invention will now be described by way of example, reference being made to the accompanying drawings in which:-

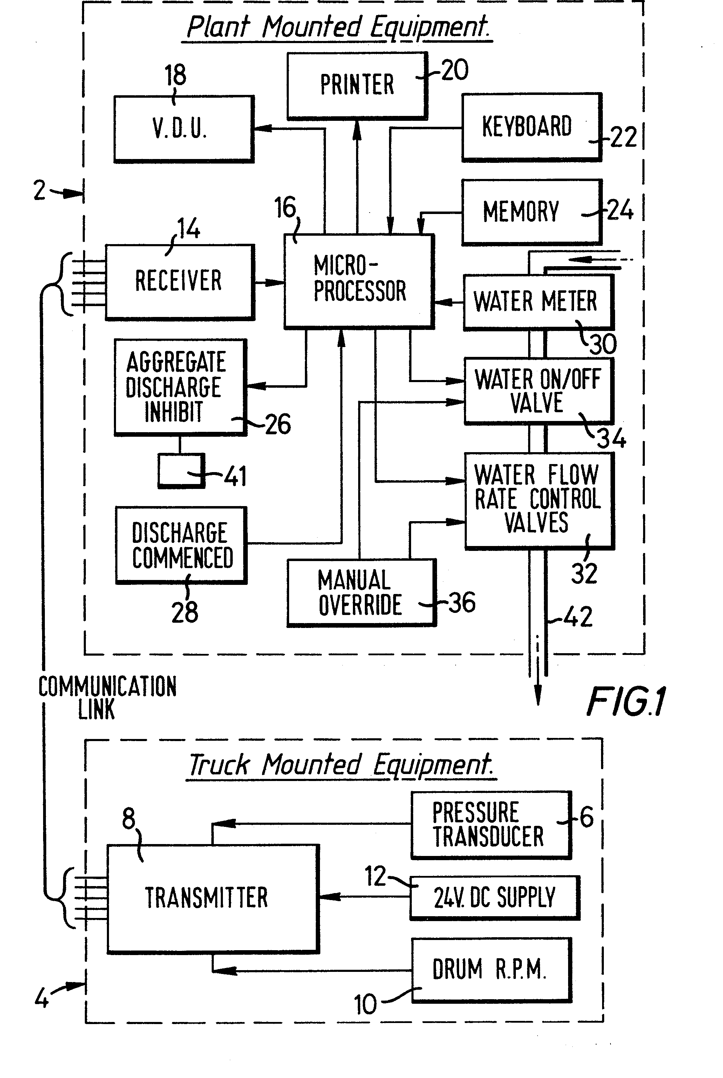

Fig. 1 shows a system according to the invention for controlling the mixing of concrete in a rotatable drum carried on a truck, and

Fig. 2 is a block diagram illustrative of part of the function of the microprocessor shown in Fig. 1.

The system illustrated in the drawing is arranged for use with a substantially conventional dry batch plant and with conventional trucks which have rotatable mixing drums mounted thereon. As the dry batch plant and the trucks are conventional, they are not illustrated and are only briefly described below.

At the dry batch plant, the basic constituents for a concrete mix, that is the cement and aggregates of various degrees of coarseness and grades, are stored in individual hoppers. Predetermined quantities of these constituents are fed into and weighed by weigh hoppers, either manually or automatically. The quantity of each constituent is determined in accordance with the intended characteristics of the concrete mix and the quantity of concrete to be mixed. A truck having a rotatable drum is positioned so that the mix constituents can be discharged into the drum. In this example, the drum is rotated by an hydraulic motor and the power output of the motor is proportional to the pressure generated in the hydraulic system. Thus the workability or slump of the concrete in the drum is proportional to the pressure in the hydraulic system with the drum rotated at a given speed.

The control system of this example is in two parts, namely a common control apparatus 2 housed within the dry batch plant, and monitoring apparatus 4 mounted on the truck. The monitoring apparatus comprises a pressure transducer 6 incorporated in the hydraulic system of the drive unit of the truck. The pressure transducer 6 generates electrical signals as a function of the pressure in the hydraulic system, which signals therefore provide a measure of the slump or workability of the concrete mix. These signals from the pressure transducer 6 are fed to an encoder/ transmitter 8. The monitoring system 4 also includes means for deriving electrical signals representing the speed of rotation of the mixing drum. In this example, this means comprises a plurality of markers equi-angularly spaced circumferentially around the drum or an axial shaft extending from the closed end of the drum and arranged to actuate a proximity switch 10 mounted at a defined axial position to produce an electrical impulse as each marker passes the switch. The frequency of the electrical impulses so generated is thus proportional to the speed of rotation of the drum. These impulses at the output of the proximity switch 10 are fed to the encoder/transmitter 8.

The encoder/transmitter 8 digitally encodes the information received from the pressure transducer 6 and the proximity switch 10 and transmits these to the common control apparatus 2 through a communication link which can take any suitable form. The communication link can be a direct physical electrical connection between the monitoring apparatus 4 and the common control apparatus 2, but as the rotatable mixing drum is carried on a truck, it is preferred not to have such a physical connection. The information could, for example, be transmitted by radio or other electromagnetic techniques, optically or by ultrasonics.

The encoder/transmitter 8 is also arranged to transmit a unique identification code identifying the truck on which it is mounted and hence the capacity of the drum being loaded. The identification code can also be used to identify the destination of the truck and hence the parameters of the mix required.

As will be appreciated, a suitable source of electrical power 12 is carried on the truck and this can conveniently be the battery of the truck or any other 24V D.C. supply.

The common control apparatus 2 includes a receiver/decoder 14 for receiving and decoding the data transmitted by the encoder/transmitter 8 and operable to supply this data to a processor unit 16 which is a microprocessor which is connected to control the operation of, and supply data to, a visual display unit 18 and a printer 20. Data is supplied to the microprocessor 16 from a manually operable keyboard 22 and a memory 24 which can be either internal of or external to the microprocessor 16. The memory 24 stores various concrete mix designs, e.g., the quantities and nature of the constituents required for any given application and strength, the slump requirements and the theoretical amount of water needed for each such design. The memory 24 also stores data relating to the plant and to the trucks.

The, or each of, the weigh hoppers of the plant has a delivery outlet controlled by a gate 41 controlled by a solenoid valve. Such a gate is normally held closed by a discharge inhibiting circuit 26 arranged to inhibit an electrical energising signal to the solenoid valve. A discharge commenced circuit 28 is provided to sense when the gate of the or each weigh hopper is opened and delivery commenced and to provide a corresponding signal to the processor unit 16. A water supply pipe 42 is provided for the supply of water to the drum. The quantity of water supplied is measured by a water meter 30 which is conveniently arranged to produce one electrical pulse for every 5 litres of water delivered and which provides this information to the microprocessor 16. The rate of flow of water through the supply pipe 42 is controlled by the microprocessor 16 through one or more control valves 32 preferably in a stepwise manner so that the rate of flow is increased or decreased in discrete steps.

The water flow rate is controlled to achieve ribbon feeding of the water into the drum throughout the discharge of the solid constituents into the drum. This ensures fast and efficient mixing of the constituents and distribution of the cement-water paste. An on/off valve 34 operated by a solenoid valve is also provided to control the water flow. This requires a permanent energising signal from the microprocessor 16 to open the valve 34 and hold it open. However, the on/off valve 34 and the flow rate control valve 32 can be overridden by means of a manual override 36. The water meter 30 will continue to measure the amount of water fed through the supply pipe 42 to the mixing drum whether water is fed under the control of the system or under manual control.

In the operation of the system described, the truck is positioned in the plant to receive the constituents to be discharged from the weigh hoppers. Rotation of the drum is commenced. The plant operator enters data to the processor unit 16 by way of keyboard 22. In general, the operator will initially ensure that a docket number is accorded to the load to be mixed either by automatic incrementation of the last docket number by the processor unit or by the operator entering a chosen docket number. The operator also inputs details of the load of concrete to be mixed, namely, the volume of concrete required, the predetermined workability required, and a code representative of a particular formulation of concrete mix. These formulations are stored in the memory 24 such that when the code is entered together with the volume of concrete required, the relative proportions of the constituents required are identified and displayed on the visual display unit. Also identified and displayed is the theoretical quantity of water required. The operator can then initiate weighing of the solid constituents of the mix although, with advantage, this can be done automatically once the required relative proportions have been identified.

The memory 24 need not necessarily store the formulations referred to as these can be determined from a conventional batch book containing concrete mix designs. In this case the memory 24 would store equations from which the theoretical amount of water necessary to achieve the predetermined slump or workability of the mix for a given code or formulation and volume can be calculated by the processor unit 16.

The processor unit 16 can be programmed to adjust the theoretical quantity of required water to take into account the moisture content of the solid constituents but this is not generally known with any degree or accuracy. Having derived the theoretical quantity of water required, the processor unit 16 then calculates a predetermined initial quantity of water as a fraction of the theoretical quantity. Typically this would be 80 to 90% of the theoretic value. At the same time, the processor unit 16 would identify the difference between the fractional value and the theoretical value.

Transmission of digitally coded information from the truck by the encoder/transmitter 8 is inhibited until the drum has attained a minimum revolution rate, for example 7 revolutions per minute. Once the rate of revolution attains this minimum value, the encoder/transmitter 8 transmits to the receiver/decoder 14 the encoded information representative of the drum revolution speed, the hydraulic pressure and the truck identification code. The identification code for the truck identifies the capacity of the drum and the processor unit 16 compares this with the volume of concrete to be mixed.

The revolution rate of the drum is monitored by the processor unit 16 and compared with a pre-set rate for the particular truck. This pre-set rate is typically 12 revolutions per minute with a tolerance of $\pm$ 1 r.p.m. and discharge of the solid constituents from the weighing hoppers to the drum is inhibited by the discharge inhibit circuit 26 until the drum is rotating at a speed within the allowed tolerance of the pre-set rate.

The drum revolution rate is indicated on the visual display unit 18 together with an indication of any correction required to achieve the pre-set rate. Thus the hydraulic motor on the truck can be adjusted to obtain the pre-set rate.

Once the drum revolution rate reaches the pre-set rate within the tolerance range referred to, the discharge inhibit circuit is disabled such that the weigh hopper gates 41 are opened. The weighed solid constituents are then fed to the drum. The discharge commenced circuit 28 senses the opening of the gates 41 and signals the processor unit 16 so that the number of revolutions made by the drum from the start of the discharge of the solid constituents to the point at which the required workability is achieved can be recorded together with the final revolution rate of the drum.

The addition of water to the drum is commenced when the weigh hopper gates 41 are opened. However, it is permissible to commence the addition of water to the drum in advance of the commencement of the delivery of the solid constituents.

The flow rate of the water to the drum is controlled by the control valve or valves 32 to achieve ribbon feeding, and when the predetermined initial quantity of water, i.e., the calculated fraction of the theoretical value, has been added, the on/off valve 34 is actuated to prevent further addition of water at this stage. The drum continues rotating at the pre-set speed and the output signal from the pressure transducer 6 is monitored until it is steady within a pre-set tolerance when a pressure reading is taken.

Curves representing the relationship between hydraulic pressure and the slump or workability of the concrete are stored in the memory 24 and the pressure reading taken is compared with these curves to determine the workability of the concrete mix in the drum. As only a fraction, e.g., 80-90% of the theoretically required water has been added, it is unlikely that the measured workability of the concrete will equal the predetermined desired workability. However, the additional amount of water required for a given mix to raise the workability from one value to another can be calculated and can be represented in the form of curves or tables. This information is also stored in the memory 24 so that the measured initial workability can be compared with the predetermined workability to derive a measure of the additional water required to raise the workability of the mix to the desired value. This measured additional value of water is compared with the difference between the fractional value of water added and the theoretical required value and the smaller or lesser of these values is selected by the processor unit 16 which initiates the addition to the mixing drum of the selected further quantity of water. The workability of the mix is then monitored until a steady state is reached and compared with the predetermined required workability. As a reasonable tolerance is allowed on the workability, it is to be expected that the workability of the mix will fall within the allowed tolerance range and the mix will be ready for transportation to the site. The processor unit 16 will record the final measured workability of the mix and the mixing operation would be considered at an end.

If, after the addition of the further water, the measured workability of the mix is less than the predetermined value, further water can be added as a function of this difference value, but is unlikely to be necessary.

At the end of the mixing operation the speed of rotation of the drum is reduced to a steady agitating speed which is below the minimum revolution rate and transmission of information from the encoder/transmitter 8 is inhibited.

The processor unit 16 causes the printer 20 to print out recorded information from the terminated mixing operation when the transmission of information from the encoder/ transmitter 8 to the receiver/decoder 14 ceases. The information in the print out will preferably contain the docket number, the original parameters for the batch input by the operator (volume, mix design code, workability required), the truck identification code, the final revolution speed of the drum, the number of revolutions of the drum since the discharge commenced circuit 28 signalled the processor unit 16, the final steady pressure reading from the pressure transducer and the total quantity of water added. If required, the figures for water added could also identify the further quantity of water added after the predetermined initial quantity and/or any quantity of the water added manually.

Operators frequently add a quantity of water to the mixing drum before any of the constituents of the concrete mix are discharged into the drum. This can still be allowed with the system of the invention, the operator simply actuating the manual override 36 to actuate the on/off valve 34 and the control valves 32 as required. Any such water is measured by the meter 30 and is taken to be a part of the predetermined initial quantity of water to be fed to the cement mix.

The manual override enabling the on/off valve 34 to be turned off is always available. However, provision can be made to prevent manual operation of the valve 34 to the on position once the discharge commenced circuit 28 has signalled the processor unit 16.

Provision may also be made to enable the processor unit 16 to be used to calculate the quantities of the constituents of a concrete mix, cause the water quantity required to be displayed, and to display the quantity of water flowing through the supply pipe when a concrete load is to be loaded manually as at present, for example, because the truck is not fitted with a monitoring apparatus.

In the description given above it is stated that the amount of water to be added is calculated from equations stored in the memory 24 giving the theoretical amount of water necessary to produce concrete having the slump specified. In practice, the memory would not include any such equations for determining the water necessary to produce workability levels over 100mm. In such cases, the system would act to produce workability levels having a 100mm slump and subsequently a predetermined amount of water would be added to bring the slump to the desired value. The specified workability would be recorded on the print out.

In an embodiment, the common control apparatus 2 would be provided with an indicator device (not illustrated), such as a lamp or a klaxon, and would be arranged to energize the indicator device to produce an external signal when the workability specified had been achieved.

In the embodiment described above, the mixing drum of the truck is rotated by an hydraulic motor and the workability of the concrete is determined by measuring the hydraulic pressure in the motor drive at a pre-set speed of rotation of the drum. Of course, other types of drive units could be employed, for example, the mixing drum could be rotated by an electric motor. In such a case, the monitoring apparatus would be provided with a suitable transducer for measuring the power output of the drive unit in place of the pressure transducer 6. Alternatively, the mixing drum rotated by any means, for example, by hydraulic pressure or electric motor(s) could be mounted as a fixed installation within the dry batch plant or central mixing plant.

Also, in the case of a fixed drum and rotating paddles or vanes, the power output of the drive unit to the paddles or vanes, at a pre-set speed of rotation would be measured to derive a measure of the workability of the mix.

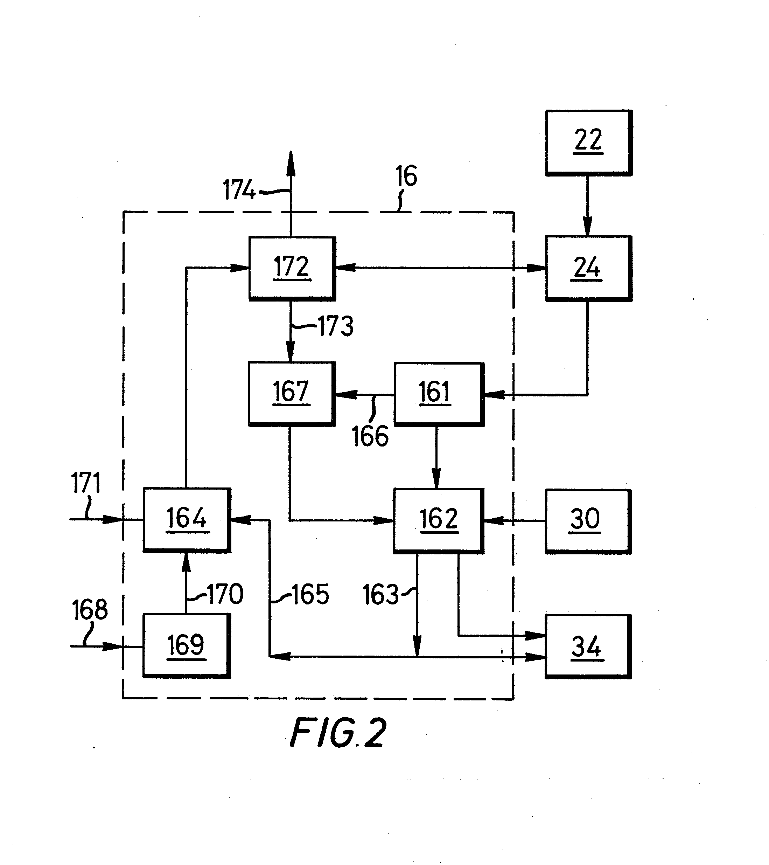

Fig. 2 is a block diagram illustrative of part of the functioning of the micro-processor 16 in the embodiment referred to. The memory 24 is shown identifying to a proportionality calculating unit 161 the theoretical quantity of water required. This unit 161 calculates the predetermined fraction of the theoretical quantity of water required together with the balance value, i.e., the difference between the selected fractional value and the theoretical value.

A signal representing the calculated fractional value is sent to a comparator 162 which compares the delivered quantity of water as measured by the water meter 30 with the calculated fractional value and when these are equal it signals the on/off valve 34 along off line 163 and closes the valve 34. As has been described, this signal is represented in fact by switching off the energising signal to the valve 34. This state is sensed by gate 164 along line 165. The balance value of water referred to above is communicated along line 166 by the proportionality calculating unit 161 to a comparator unit 167.

The signal representing the speed of rotation of the drum is supplied along line 168 to a speed comparator 169 which identifies when the speed of rotation is within the pre-set tolerance range of 12 r.p.m. $\pm$ 1 r.p.m. and when a substantially steady state is reached. The speed comparator 169 identifies this state along line 170 to the gate 164 which is now opened in response to this signal and the signal along line 165 identifying the closure of on/off valve 34. The signal representing the measured workability of the mix is supplied along input line 171 to the gate 164 which, in its open condition, passes this signal to a difference measuring unit 172 which accesses the memory 24 to derive a measure of the estimated quantity of additional water required to raise the workability to the predetermined required value. This information is passed along line 173 to the comparator unit 167 which compares this estimated value with the balance value communicated along line 166, identifies the lower of these two values and communicates this lower value to the comparator 162 which then opens the on/off valve 32 by signal along line 174 and by the input from meter 30 meters this lower value of water to the drum. Once this lower value has been supplied, the comparator 162 switches off the valve 34. Once the speed of rotation has settled down to a steady state within the tolerance range of the pre-set value, the measured workability of the mix is passed by the gate 164 to the difference measuring unit 172 which, if the workability is below the acceptable tolerance range will initiate the further addition of water as will be understood from the above description. However, it is to be expected that the measured workability will at this stage be within the acceptable tolerance range in which case the unit 172 will generate a signal along line 174 indicating that the operation is at an end. This signal can be used for a variety of purposes, e.g., to initiate recording of the final workability of the mix, to reduce the speed of rotation of the drum to a steady agitating value, to initiate a print-out of the various parameters required for record purposes and to operate a visual or audible alarm.

It will be appreciated that the control system of the present invention controls the addition of water to the mix and ensures that excess water is not added thereby leading to a more reliable and economic mixing operation.

It will also be appreciated that the control system of the present invention has application in the mixing of concrete where the mechanical mixer is located at a fixed location and, once the concrete has been mixed to the desired workability, delivers the ready mixed concrete to a truck or the like for transportation to the site. Also, it is within the scope of the present invention to have the common control apparatus 2 at a central location controlling a number of mixing operations of a number of mechanical mixers. The mechanical mixer or plurality of mechanical mixers need not be in proximity to the common control apparatus depending upon the nature of the communication link.

It will be noted from the foregoing disclosure that the present invention is concerned to avoid adding excess water to the concrete mix and achieves this by first incorporating in the mix an initial quantity of water which is a predetermined fraction of the theoretical value required to achieve a predetermined slump or workability and then measuring the actual slump or workability achieved to determine the quantity of additional water required. As described in the preferred embodiment, this quantity of additional water is the lesser of the determined volume of water required to raise the slump or workability from the measured value to the predetermined value and the balance value between the predetermined fraction of the theoretical value and the actual theoretical value. Such a method and control system is to be preferred particularly where one can ensure that the theoretical value of water required to achieve the desired workability is based on the use of dry solid materials or accurately reflects the moisture content of the solid materials. In such a case, the determined volume of additional water will not exceed the balance of the theoretical value and could simply be used to control the addition of the further water although the comparison with the balance value of the theoretical quantity does ensure that excess water is not added.

However, the moisture content of the solid materials cannot be estimated with any degree of accuracy and if the theoretical values stored in the microprocessors 16 are modified to take into account a moisture content which greatly exceeds the actual moisture content, the theoretical value will be less than the volume of additional water determined from the workability of the mix. This, whilst ensuring that excess water is not added could make the method and system cumbersome, especially if the estimated moisture content is considerably in error on the high side.

To take account of such a situation it is possible, within the scope of the possible invention, to perform the method of the invention and to modify the control system described by omitting the comparison between the determined measure of additional water and the balance value of the theoretical quantity of water. In this case, the additional water added after determining the workability would be of such a volume as not to exceed the determined measure of additional water and would preferably be a predetermined major fraction of the determined measure of additional water, e.g., 80 to 90% by volume. It can readily be seen in such a case that, referring to Fig. 2, the line 166 and the comparator unit 167 can be omitted. The difference measuring unit 172 would access the memory 24 to derive a measure of the estimated quantity of additional water required, as before, and would then instruct the comparator 162 to initiate the addition of further water to the mix in a quantity equal to this derived measure or a predetermined major fraction thereof.

Claims:

1.    A method of mixing concrete in a mechanical mixer which comprises supplying to the mixer solid constituents according to a predetermined formulation requiring a theoretical quantity of water to be added to achieve a predetermined workability of the mix characterised by the steps of adding to the mixer with the solid constituents an initial volume of water corresponding to a predetermined fraction of the theoretical quantity of water, deriving a measure of the workability of the mix and comparing this with the predetermined workability to derive a measure of the additional water required to achieve the predetermined workability and adding to the mix a further quantity of water not exceeding the derived measure of additional water.

2.    A method according to claim 1 characterised in that the further quantity of water is a predetermined fraction of the derived measure of additional water.

3.    A method according to claim 1 or 2 characterised in that the further quantity of water is less than the difference between the predetermined fraction of the theoretical quantity of water and said theoretical quantity of water.

4.    A system for controlling the mixing of concrete in a mechanical mixer to which solid constituents are supplied according to a predetermined formulation requiring a theoretical quantity of water to be added to achieve a predetermined workability of the mix characterised by means for determining a predetermined fraction of the theoretical quantity of water, means for adding to the mixer with the solid constituents an initial quantity of water corresponding to the predetermined fraction, means for deriving a measure of the workability of the mix, means responsive to the difference between the derived measure of workability and the predetermined workability to derive a measure of the additional water required to achieve the predetermined workability and means for initiating the addition to the mix of a further quantity of water not exceeding the derived measure of additional water.

5. A system according to claim 4 characterised in that the means for initiating the addition of a further quantity of water to the mix is operable to initiate such further quantity as a major fraction of the derived measure of additional water.

6. A system according to claim 4 or 5 characterised in that the means for determining a predetermined fraction of the theoretical quantity of water is operable to determine a balance value corresponding to the difference between the predetermined fraction of the theoretical quantity and the theoretical quantity and the means for initiating the addition of a further quantity of water to the mix is operable to compare said balance value with said derived measure of additional water to initiate the addition to the mix of said further quantity of water in an amount not exceeding the lesser of said balance value and said derived measure of additional water.

7. A system according to claim 4, 5 or 6 characterised by a control apparatus incorporating said means for determining said predetermined fraction of theoretical water, said means for deriving a measure of the additional water required and said means for initiating the addition of said further quantity of water, a monitoring apparatus associated with said mechanical mixer and incorporating the means for deriving a measure of the workability of the mix and means for establishing a communications link between the control apparatus and the monitoring apparatus.

8. A system according to claim 7 in which the mechanical mixer is a rotatable mixing drum characterised in that the means for deriving a measure of the workability of the mix comprises means for measuring the power output of drive means for the drum.

9. A system according to claim 4 in which the mechanical mixer is a rotatable mixing drum driven by an hydraulic motor carried on a truck and means is provided at a fixed location for loading solid constituents into the drum in accordance with the predetermined formulation together with a source for supplying water to the drum characterised by monitoring apparatus carried on the truck and comprising a transducer for measuring the power of the output of the motor as a function of the hydraulic pressure to provide said means for deriving a measure of the workability of the mix, speed measuring means operable to measure the speed of rotation of the drum and transmitting means for transmitting data representing said derived measure of workability and said speed of rotation over a communication link and control apparatus incorporating said means for determining said predetermined fraction of the theoretical quantity of water, said means for deriving a measure of the additional water required and said means for initiating the addition of said further quantity of water and further incorporating a receiver for receiving said data transmitted over the communication link.

10. A system according to claim 9 characterised in that said means for determining said predetermined fraction of theoretical water includes means for determining a balance value corresponding to the difference between said predetermined fraction of theoretical water and said theoretical quantity of water and said means for initiating the addition of said further quantity of water includes means for comparing said balance value with said derived value of additional water to initiate the addition of said further quantity of water in a quantity not greater than said balance value.

11. A system according to any one of claims 7 to 10 characterised in that the control apparatus includes a memory for storing data representing the theoretical quantity of water for a given formulation and data representing the measure of additional water required to increase the workability of the mix from the derived measured value to the predetermined value.

12. A system according to claim 11 characterised in that means is provided for identifying to the memory the required formulation of the mix to identify the theoretical quantity of water required together with means for identifying to the memory the derived measured value of workability of the mix to identify said derived measure of additional water required to achieve the predetermined workability.

13. A system according to any one of claims 9 to 12 characterised in that said control apparatus includes means responsive to the speed of rotation of the drum to inhibit loading of the solid constituents into the drum until the drum speed attains a pre-set value within a given tolerance range.

14. A system according to claim 13 characterised in that said control apparatus includes means for measuring the volume of water delivered, means responsive to the measured volume of delivered water to terminate delivery of the initial quantity of water when the initial volume of delivered water is substantially equal to said predetermined fraction, and means for sensing the measured workability of the mix when the measured speed of rotation of the drum is substantially constant at said pre-set value within the given tolerance range.

15. A system according to claim 14 characterised in that the means responsive to the measured volume of delivered water is further operable to terminate delivery of the further quantity of water when the measured volume of the delivered further quantity of water is equal to the lesser of the derived measure of additional water and the difference between the predetermined fraction of the theoretical quantity and the theoretical quantity.

0126573

1/2

Plant Mounted Equipment.

FIG.1

COMMUNICATION LINK

Truck Mounted Equipment.

0126573

FIG.2

0126573

European Patent Office

**EUROPEAN SEARCH REPORT**

Application nu...

EP 84303018.0

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int. Cl. ³) |
| A | DE - B2 - 2 432 609 (U. AMMANN)<br>* Totality *<br><br>-- | 1,4 | B 28 C   1/12 |
| A | DE - A1 - 2 855 324 (ELBA-WERK)<br>* Totality *<br><br>-- | 1,4 | |
| A | DE - A1 - 3 001 912 (ELBA-WERK)<br>* Totality *<br><br>---- | 1,4 | |
| | | | **TECHNICAL FIELDS SEARCHED (Int. Cl. ³)**<br><br>B 28 C<br>G 05 D |

The present search report has been drawn up for all claims

| Place of search | Date of completion of the search | Examiner |
|---|---|---|
| VIENNA | 24-08-1984 | GLAUNACH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO Form 1503. 03.82